# EUROPEAN PATENT APPLICATION

(11) **EP 2 431 848 A2**
(43) Date of publication of application: **21.03.2012**
(21) Application number: 11181576.7
(22) Date of filing: 16.09.2011
(51) Int. Cl.: G06F 3/042

(54) **Optical waveguide device and optical touch panel**

(30) Priority: 16.09.2010 JP 2010207459
(71) Applicant: Nitto Denko Corporation, Osaka 567-8680 (JP)
(72) Inventor: Juni, Noriyuki, Osaka, 567-8680 (JP)
(74) Representative: HOFFMANN EITLE

(57) **Abstract**

In an optical touch panel (10) of the present invention, at a light-emitting side, there is provided an optical waveguide device (17), in which a light input end of an optical waveguide laminate (12) laminated by a plurality of optical waveguides (12a, 12b, 12c) is optically coupled to a two-dimensional light-emitting element (11). At a light-receiving side thereof, there is provided an optical waveguide device (18), in which a light output end of an optical waveguide laminate (15) laminated by a plurality of optical waveguides (15a, 15b, 15c) is optically coupled to a two-dimensional light-receiving element (16).

## Description

### TECHNICAL FIELD OF THE INVENTION

The present invention relates to an optical waveguide device capable of an optical three-dimensional detection and an optical touch panel capable of an optical three-dimensional detection by using the same.

### BACKGROUND ART

There is known an optical touch panel in which light from a light-emitting element is led to a coordinate input region through a light-emitting side optical waveguide and light having passed through the coordinate input region is led to a light-receiving element through a light-receiving side optical waveguide (see US 6,351,260 B1 and JP-A-2008-181411, for example).

The optical touch panel in US 6,351,260 B1 (USER INPUT DEVICE FOR A COMPUTER SYSTEM) can detect two-dimensional coordinates (x and y coordinates) of an object blocking light rays of the coordinate input region. Moreover, the optical touch panel mentioned in JP-A-2008-181411 (OPTICAL WAVEGUIDE FOR TOUCH PANEL) can detect two-dimensional coordinates (x and y coordinates) of an object blocking light rays of the coordinate input region.

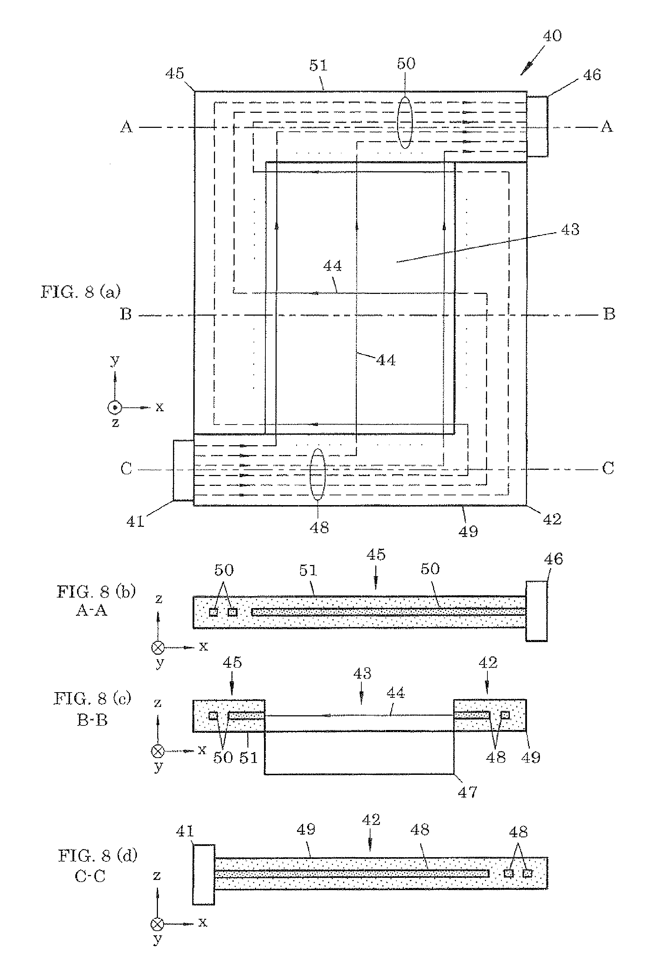

FIG. 8 shows an optical touch panel 40 in JP-A-2008-181411. As shown in FIG. 8(a), light emitted from a light-emitting element 41 outputs onto a coordinate input region 43 through a light-emitting side optical waveguide 42. Light rays 44 having passed through the coordinate input region 43 enter a light-receiving element 46 through a light-receiving side optical waveguide 45. As shown in FIG. 8(c), an image display apparatus 47 is provided below the coordinate input region 43.

As shown in FIG. 8(c) and FIG. 8(d), cores 48 are embedded in a clad 49 in the light-emitting side optical waveguide 42. Moreover, as shown in FIG. 8(b) and FIG. 8(c), cores 50 are embedded in a clad 51 in the light-receiving side optical waveguide 45. The light travels through the cores 48 and cores 50 while totally reflecting at the interface of the cores 48 and a clad 49 and the cores 50 and clad 51. A refractive index of the cores 48 and cores 50 is set higher than a refractive index of the clad 49 and clad 51 so that the light reflects totally at the interface of the core 48 and core 50, and the clad 49 and clad 51.

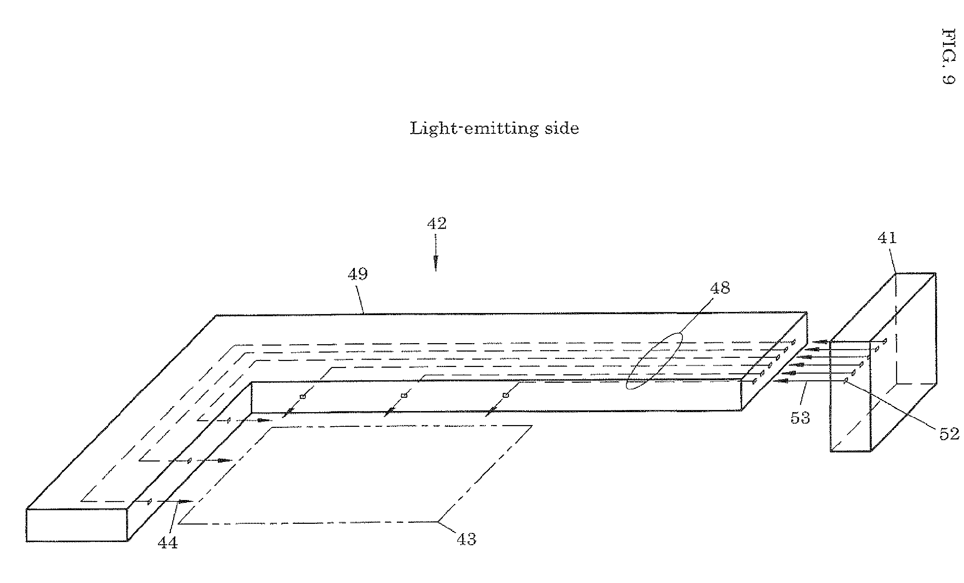

FIG. 9 is a perspective view of a light-emitting side optical waveguide device used in the optical touch panel 40 in JP-A-2008-181411. The light-emitting side optical waveguide device is a device, in which the light-emitting side optical waveguide 42 and the light-emitting element 41 are coupled. Light 53 emitting from a one-dimensional light-emitting element 41 in which light emitting regions 52 are linearly placed is incident upon the cores 48 of the light-emitting side optical waveguide 42. The light having passed through the cores 48 emanates onto the coordinate input region 43 as the light rays 44 from ends (exit ports) of the cores 48. In FIG. 9, the light-emitting side optical waveguide 42 and the light-emitting element 41 are drawn apart from each other for the sake of description but actually, the light-emitting side optical waveguide 42 and the light-emitting element 41, which adhere to each other, are optically coupled.

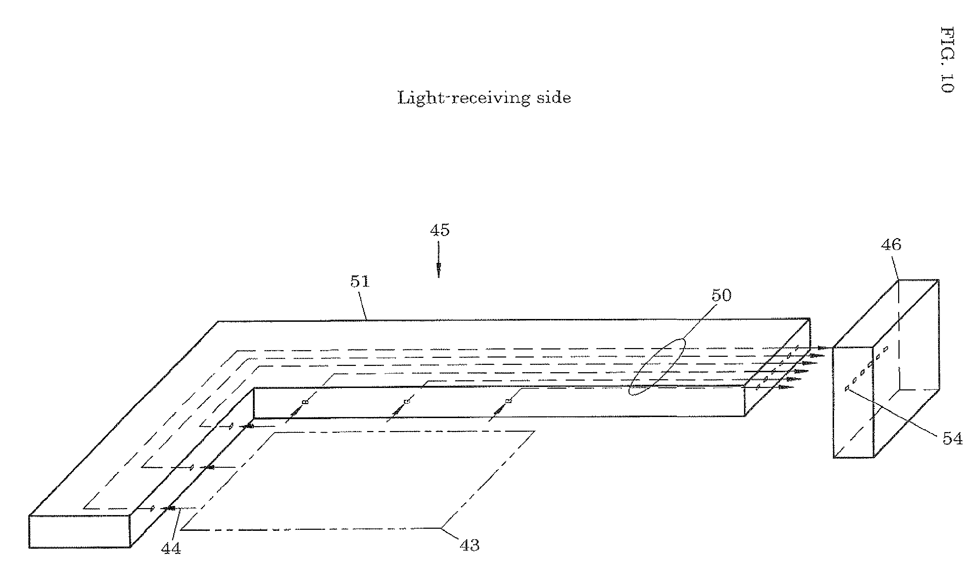

FIG. 10 is a perspective view of a light-receiving side optical waveguide device used in the optical touch panel 40 in JP-A-2008-181411. The light-receiving side optical waveguide device is a device, in which the light-receiving side optical waveguide 45 and the light-receiving element 46 are coupled. The light 44 having passed through the coordinate input region 43 is incident upon the cores 50 of the light-receiving side optical waveguide 45. The light having passed through the cores 50 emanates from the end of the cores 50 and is incident upon the one-dimensional light-receiving element 46 in which light-receiving regions 54 are linearly placed. In FIG. 10, the light-receiving side optical waveguide 45 and the light-receiving element 46 are drawn apart from each other for the sake of description but actually, the light-receiving side optical waveguide 45 and the light-receiving element 46, which adhere to each other, are optically coupled.

The optical touch panel 40 of JP-A-2008-181411 shown in FIG. 8 has no means for detecting a heightwise coordinate (z coordinate; a coordinate in a direction vertical to the surface of the coordinate input region 43) of the object. Therefore, the optical touch panel 40 mentioned in JP-A-2008-181411 cannot detect the heightwise coordinate (z coordinate) of the object of the coordinate input region 43. Similarly, the optical touch panel in US 6,351,260 B1 cannot detect the heightwise coordinate (z coordinate) of the object of the coordinate input region, either.

A variety of usage methods can be considered if the three-dimensional coordinates (x, y, and z coordinates) of the object of the coordinate input region can be detected and therefore touch panels which can detect the three-dimensional coordinates are disclosed (see JP-A-08-212005, JP-A-2006-92410, JP-A-10-133818, JP-A-2006-39745, and JP-A-2006-126997, for example).

In JP-A-08-212005 (THREE-DIMENSIONAL POSITION RECOGNITION TYPE TOUCH PANEL DEVICE), a plurality of sensors placed in an x direction, a y direction, and a z direction are provided in the periphery of a coordinate input region (the z direction is a height direction). The touch panel mentioned in JP-A-08-212005 is an optical touch panel. Using this panel, the z coordinate of an object blocking the light rays of the coordinate input region is detected. In JP-A-08-212005, a method of using identified three-dimensional position data is mentioned in detail, a specific description regarding the structure of the sensor, however, is not provided. Therefore, a means for detecting the three-dimensional coordinates (x, y, and z coordinates) of the object is not obvious in JP-A-08-212005.

In JP-A-2006-92410 (ELECTRONIC PEN AND TOUCH PANEL APPARATUS), a plurality of sensors placed in horizontal directions (an x direction and a y direction) are provided in the periphery of a coordinate input region. The touch panel mentioned in JP-A-2006-92410 is an optical touch panel. However, there is no sensor placed in the height direction (z direction). Therefore, this touch panel apparatus cannot optically detect the z coordinate. Instead, the above technology can detect pen pressure on an electronic pen and a gradient of the electronic pen and calculate a pressing force in the z direction. Then the technology converts the pressing force in the z direction into the z coordinate so as to detect the three-dimensional coordinates (x, y, and z coordinates) of the electronic pen. A dedicated electronic pen needs to be used in the touch panel apparatus in JP-A-2006-92410. Therefore, this touch panel apparatus is not suitable for touch panel apparatuses such as an ATM and an automatic ticket machine used by an unspecified number of people.

In JP-A-10-133818 (INPUT METHOD AND DEVICE FOR TOUCH PANEL), a surface elastic wave touch panel is used. The surface elastic wave touch panel can detect the pressing force of a touch. Therefore, the technology detects the three-dimensional coordinates (x, y, and z coordinates) of an object by converting the pressing force of the touch into the z coordinate. This requires a user to adjust the pressing force level of the touch so that it is in accord with the setting of the touch panel. It is difficult to require an unspecified number of people to adjust the pressing force level. Moreover, an excess pressing force causes damage to the touch panel.

In JP-A-2006-39745 (TOUCH-PANEL TYPE INPUT DEVICE), a pressure sensitive sensor is provided on the back surface of a resistive film touch panel. The pressing position (x and y coordinates) is detected by a usual function of the resistive film touch panel. The pressing force and the pressing time are detected by the pressure sensitive sensor and the pressing force and the pressing time are converted into the z coordinate. The z coordinate and the pressing position (x and y coordinates) are combined so as to detect the three-dimensional coordinates (x, y, and z coordinates) of an object. A user should adjust the pressing force and the pressing time of a touch so that these are in accord with the setting of the touch panel. It is difficult to require an unspecified number of people to adjust the pressing force and the pressing time. Moreover, an excess level of the pressing force causes damage to the touch panel. If the pressure sensitive sensor is added to the resistive film touch panel, in which the display performance of an image display apparatus can be easily degraded, the display performance of the image display apparatus may be decreased further.

In JP-A-2006-126997 (THREE-DIMENSIONAL TOUCH PANEL), a load applied to a coordinate input region is detected by pressure sensors provided at four corners of the coordinate input region. The position (x and y coordinates) of an object which has pressed the coordinate input region and the pressing force thereof are calculated from output of the four pressure sensors. The three-dimensional coordinates (x, y, and z coordinates) of the object are detected by converting the pressing force into the z coordinate. A user should adjust the pressing force level of a touch so that it is in accord with the setting of the touch panel. It is difficult to require an unspecified number of people to adjust the pressing force level. Moreover, an excess level of the pressing force causes damage to the touch panel.

### SUMMARY OF THE INVENTION

In order to solve the above-described problems, an object of the present invention is to provide:
(1) an optical waveguide device which can optically detect three-dimensional position coordinates (x, y, and z coordinates) of an object, and
(2) an optical touch panel which can optically detect three-dimensional position coordinates (x, y, and z coordinates) of an object by using the optical waveguide device.

The summary of the present invention is as follows:
According to the present invention, there is provided an optical waveguide device (at the light-receiving side) including an optical waveguide laminate. The optical waveguide laminate is configured such that at least some of a plurality of optical waveguides are laminated. The optical waveguide laminated body includes an input end and an output end of light. The light output end of the optical waveguide laminate is optically coupled to a two-dimensional light-receiving element, in which light-receiving regions are placed two-dimensionally.

In particular, the plurality of optical waveguides are laminated by closely adhering to each other at the light output end. Moreover, a plurality of optical waveguides are mutually separated at the light input end.

According to the present invention, there is also provided an optical waveguide device (at the light-emitting side) including an optical waveguide laminate. The optical waveguide laminate is configured such that at least some of a plurality of optical waveguides are laminated. The optical waveguide laminate includes an input end and an output end of light. The light input end of the optical waveguide laminate is optically coupled to the two-dimensional light-emitting element, in which light emitting regions are placed two-dimensionally.

In particular, the plurality of optical waveguides are laminated by closely adhering to each other at the light input end. Moreover, a plurality of optical waveguides are mutually separated at the light output end.

According to the present invention, there is also provided an optical touch panel including the above-described optical waveguide device (1) or (2) as the light-receiving side optical waveguide device. Moreover, the optical touch panel of the present invention includes the above-described optical waveguide device (3) or (4) as the light-emitting side optical waveguide device. The optical touch panel of the present invention includes a plurality of light ray layers emanating from the light-emitting side optical waveguide device and incident upon the light-receiving side optical waveguide device in a coordinate input region. The plurality of light ray layers are parallel to a surface of the coordinate input region and mutually separated.

### EFFECTS OF THE INVENTION

(1) The optical touch panel of the present invention optically detects even a heightwise coordinate of an object, and thus, the coordinate input region is not required to be pressed and therefore there is less possibility of damage.
(2) The optical touch panel of the present invention does not need special input means (such as an electronic pen), and similarly to a usual touch panel, entry by finger is possible.
(3) The optical touch panel of the present invention is suitable for input apparatuses such as an ATM and an automatic ticket machine which are used by an unspecified number of people.
(4) Input of two-dimensional coordinates only was possible in a conventional ATM or automatic ticket machine, however, the three-dimensional coordinate input is possible in ATMs or automatic ticket machines, in which the optical touch panel of the present invention is used.

For a full understanding of the present invention, reference should now be made to the following detailed description of the preferred embodiments of the invention as illustrated in the accompanying drawings.

### BRIEF DESCRIPTION OF THE DRAWINGS

FIG. 1 is a plan view of an optical touch panel of the present invention;
FIG. 2(a) is a cross-sectional view taken along A-A line of the optical touch panel of the present invention;
FIG. 2(b) is a cross-sectional view taken along B-B line of the optical touch panel of the present invention;
FIG. 2(c) is a cross-sectional view taken along C-C line of the optical touch panel of the present invention;
FIG. 3 is a perspective view of an optical waveguide device (at the light-emitting side) of the present invention;
FIG. 4 is a perspective view of an optical waveguide device (at the light-receiving side) of the present invention;
FIG. 5(a) is a plan view of the optical waveguide device (at the light-emitting side) of the present invention;
FIG. 5(b) is a cross-sectional view taken along A-A line of the optical waveguide device (at the light-emitting side) of the present invention;
FIG. 5(c) is a cross-sectional view taken along B-B line of the optical waveguide device (at the light-emitting side) of the present invention;
FIG. 6(a) is a plan view of the optical waveguide device (at the light-receiving side) of the present invention;
FIG. 6(b) is a cross-sectional view taken along A-A line of the optical waveguide device (at the light-receiving side) of the present invention;
FIG. 6(c) is a cross-sectional view taken along B-B line of the optical waveguide device (at the light-receiving side) of the present invention;
FIG. 7(a) is an explanatory view of a method of detecting three-dimensional coordinates (x, y, and z coordinates) of an object, in the optical touch panel of the present invention;
FIG. 7(b) is an explanatory view of a method of detecting three-dimensional coordinates (x, y, and z coordinates) of an object, in the optical touch panel of the present invention;
FIG. 7(c) is an explanatory view of a method of detecting three-dimensional coordinates (x, y, and z coordinates) of an object, in the optical touch panel of the present invention;
FIG. 8(a) is a plan view of a conventional optical touch panel;
FIG. 8(b) is a cross-sectional view taken along A-A line of the conventional optical touch panel;
FIG. 8(c) is a cross-sectional view taken along B-B line of the conventional optical touch panel;
FIG. 8(d) is a cross-sectional view taken along C-C line of the conventional optical touch panel;
FIG. 9 is a perspective view of a light-emitting side optical waveguide device used in the conventional optical touch panel; and
FIG. 10 is a perspective view of a light-receiving side optical waveguide device used in the conventional optical touch panel.

### DETAILED DESCRIPTION

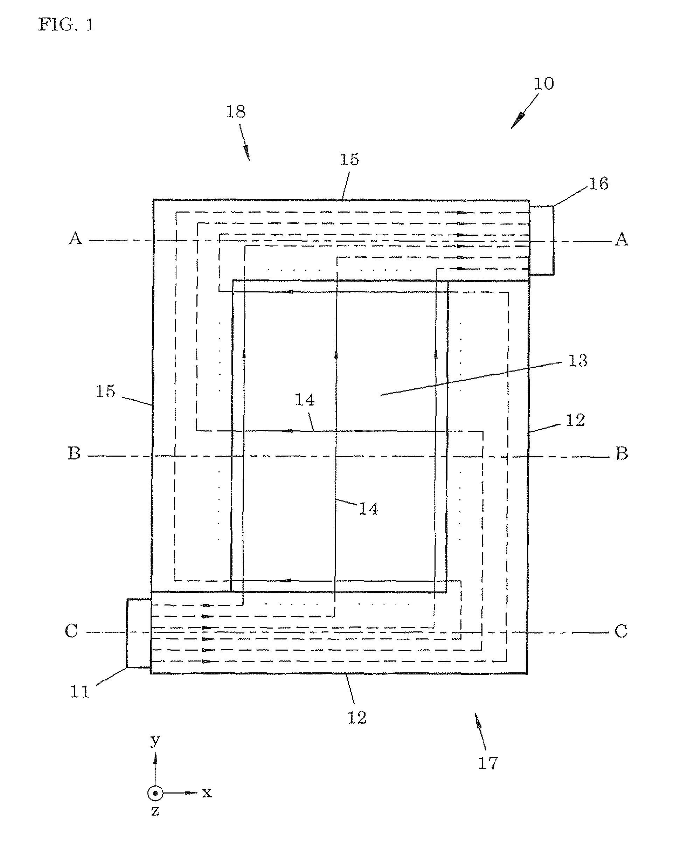

The preferred embodiments of the present invention will now be described with reference to FIGs. 1-10 of the drawings. Identical elements in the various figures are designated with the same reference numerals.

FIG. 1 is a plan view of one example of an optical touch panel 10 of the present invention. As shown in FIG. 1, light emitted from a light-emitting element 11 emanates onto a coordinate input region 13 through a light-emitting side optical waveguide laminate 12. Light rays 14 having passed through the coordinate input region 13 are incident upon a light-receiving side optical waveguide laminate 15 and enters a light-receiving element 16 through the light-receiving side optical waveguide laminate 15.

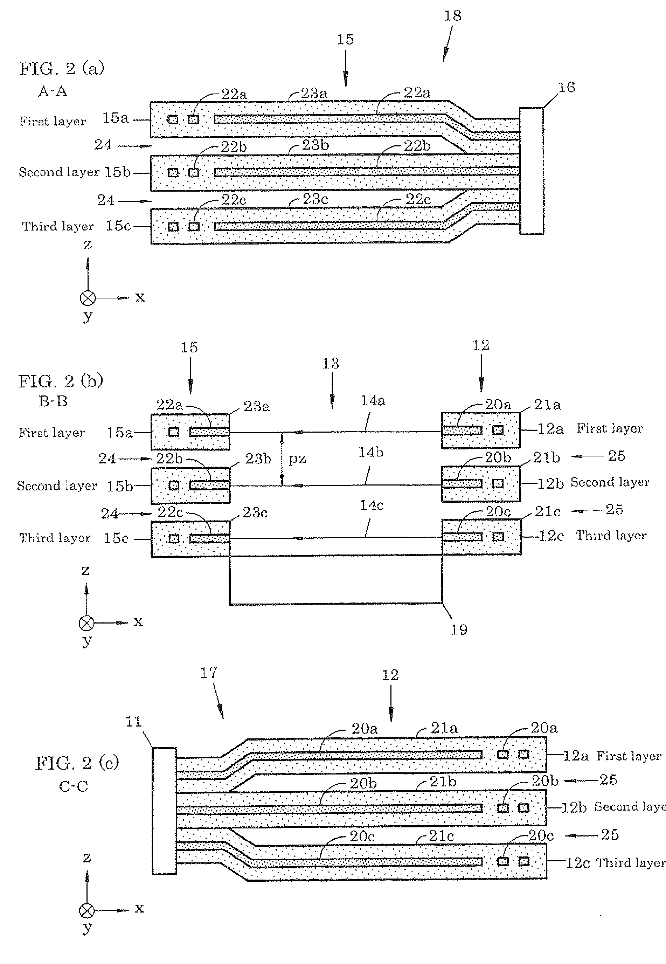

The optical touch panel 10 being an embodiment of the present invention includes an optical waveguide device 17 (at the light-emitting side) of the present invention and an optical waveguide device 18 (at the light-receiving side) of the present invention. As used herein, a device in which the light-emitting side optical waveguide laminate 12 and the light-emitting element 11 are coupled is referred to as the optical waveguide device 17 at a light-emitting side. Moreover, a device in which the light-receiving side optical waveguide laminate 15 and the light-receiving element 16 are coupled is referred to as the optical waveguide device 18 at the light-receiving side. As shown in FIG. 2(b), an image display apparatus 19 is provided below the coordinate input region 13.

FIG. 2 is a cross-sectional view of the optical waveguide device 17 at the light-emitting side and the optical waveguide device 18 at the light-receiving side used in the optical touch panel 10 of the present invention. As shown in FIGs. 2(a) and. 2(b), in an optical waveguide 15a of the light-receiving side optical waveguide laminate 15, cores 22a are embedded in a clad 23a. Moreover, in an optical waveguide 15b, cores 22b are embedded in a clad 23b. Moreover, in an optical waveguide 15c, cores 22c are embedded in a clad 23c. Light travels through the cores 22a, the cores 22b, and the cores 22c while totally reflecting at the interface of the cores 22a, 22b, and 22c and the clads 23a, 23b, and 23c. A refractive index of the cores 22a, 22b, and 22c is higher than a refractive index of the clads 23a, 23b, and 23c.

As shown in FIG. 2(b) and FIG. 2(c), in an optical waveguide 12a of the light-emitting side optical waveguide laminate 12, cores 20a are embedded in a clad 21a. In an optical waveguide 12b, cores 20b are embedded in a clad 21b. In an optical waveguide 12c, cores 20c are embedded in a clad 21c. Light travels through the cores 20a, the cores 20b, and the cores 20c while totally reflecting at the interface of the cores 20a, 20b, and 20c and the clads 21a, 21b, and 21c. A refractive index of the cores 20a, 20b, and 20c is higher than a refractive index of the clads 21a, 21b, and 21c.

In FIG. 2, the optical waveguides 12a, 12b, and 12c at the light-emitting side, and the optical waveguides 15a, 15b, and 15c at the light-receiving side are formed by three layers, respectively, these configurations, however, are exemplary. In the optical touch panel 10 of the present invention, the optical waveguides 12a, 12b, and 12c at the light-emitting side may suffice to include two or more layers; however, there is no limit on the maximum number of layers. Moreover, the optical waveguides 15a, 15b, and 15c at the light-receiving side may suffice to include two or more layers; however, there is no limit on the maximum number of layers. As shown in FIG. 2, the number of layers of the optical waveguides 12a, 12b, and 12c of the light-emitting side optical waveguide laminate 12 and the number of layers of the optical waveguides 15a, 15b, and 15c of the light-receiving side optical waveguide laminate 15 are equal in number at the time of using them in the optical touch panel 10 of the present invention.

If the number of layers of the optical waveguides 12a, 12b, and 12c at the light-emitting side and the number of layers of the optical waveguides 15a, 15b, and 15c at the light-receiving side are small, it is easy to manufacture the light-emitting side optical waveguide laminate 12 and the light-receiving side optical waveguide laminate 15. In this case, however, the number of layers of light rays 14a, 14b, and 14c in the z direction (direction vertical to the surface of the image display apparatus 19) becomes small. Usually, the number of layers of the light rays 14a, 14b, and 14c in the z direction is equal to the number of layers of the optical waveguides 12a, 12b, and 12c at the light-emitting side and the number of layers of the optical waveguides 15a, 15b, and 15c at light-receiving side. If the number of layers of the optical waveguides 12a, 12b, and 12c at the light-emitting side and the number of layers of the optical waveguides 15a, 15b, and 15c at light-receiving side are large, it becomes difficult to manufacture the light-emitting side optical waveguide laminate 12 and the light-receiving side optical waveguide laminate 15. In this case, however, the number of layers of the light rays 14a, 14b, and 14c in the z direction can be increased.

As shown in FIG. 2(a), each one end of the cores 22a, 22b, and 22c of the optical waveguides 15a, 15b, and 15c at light-receiving side is optically coupled to the light-receiving element 16. As shown in FIG. 2(a), in the light-receiving side optical waveguide laminate 15, the optical waveguide 15a, the optical waveguide 15b, and the optical waveguide 15c are laminated by closely adhering to one another at a portion where the ends thereof are coupled to the light-receiving element 16. Away from the light-receiving element 16, the optical waveguide 15a, the optical waveguide 15b, and the optical waveguide 15c do not closely adhere to one another, and there is a gap 24 between each layer. As shown in FIG. 2(b), the gap 24 is provided to adjust a distance pz (pitch in the z direction) between the light rays in the z direction to a suitable size. If the desired distance pz between the light rays in the z direction is small, there is no need of arranging the gap 24. In that case, the optical waveguide 15a, the optical waveguide 15b, and the optical waveguide 15c are laminated by closely adhering to one another across the whole surface.

As shown in FIG. 2(c), each one end of the cores 20a, 20b, and 20c of the optical waveguides 12a, 12b, and 12c at the light-emitting side is optically coupled to the light-emitting element 11. As shown in FIG. 2(c), in the light-emitting side optical waveguide laminate 12, the optical waveguide 12a, the optical waveguide 12b, and the optical waveguide 12c are laminated by closely adhering to one another at a portion where the ends thereof are coupled to the light-emitting element 11. Away from the light-emitting element 11, the optical waveguide 12a, the optical waveguide 12b, and the optical waveguide 12c do not closely adhere to one another, and there is a gap 25 between each layer. As shown in FIG. 2(b), the gap 25 is provided to adjust a distance pz (pitch in the z direction) between the light rays in the z direction to a suitable size. If the desired distance pz between the light rays in the z direction is small, there is no need of arranging the gap 25. In that case, the optical waveguide 12a, the optical waveguide 12b, and the optical waveguide 12c are laminated by closely adhering to one another across the whole surface.

As shown in FIG. 2(b), the light ray 14a emitted from the cores 20a of the optical waveguide 12a at the light-emitting side horizontally cuts the coordinate input region 13 and is incident upon the cores 22a of the optical waveguide 15a at the light-receiving side. The light ray 14b having emanated from the cores 20b of the optical waveguide 12b at the light-emitting side horizontally cuts the coordinate input region 13 and is incident upon the cores 22b of the optical waveguide 15b at the light-receiving side. The light ray 14c emitted from the cores 20c of the optical waveguide 12c at the light-emitting side horizontally cuts the coordinate input region 13 and is incident upon the cores 22c of the optical waveguide 15c at the light-receiving side.

In the optical touch panel 10 of the present invention, the optical waveguide 12a at the light-emitting side of a first layer corresponds to the optical waveguide 15a at the light-receiving side of a first layer. The optical waveguide 12b at the light-emitting side of a second layer corresponds to the optical waveguide 15b at the light-receiving side of a second layer. The optical waveguide 12c at the light-emitting side of a third layer corresponds to the optical waveguide 15c at the light-receiving side of a third layer. The correspondence relation holds true of a case where the optical waveguide has four or more layers. Usually, the light rays 14a, 14b, and 14c are parallel to the surface of the coordinate input region 13. The interval in the z direction of each optical waveguide (pitch in the z direction; corresponding to the distance pz between the light rays in the z direction) may or may not be equal.

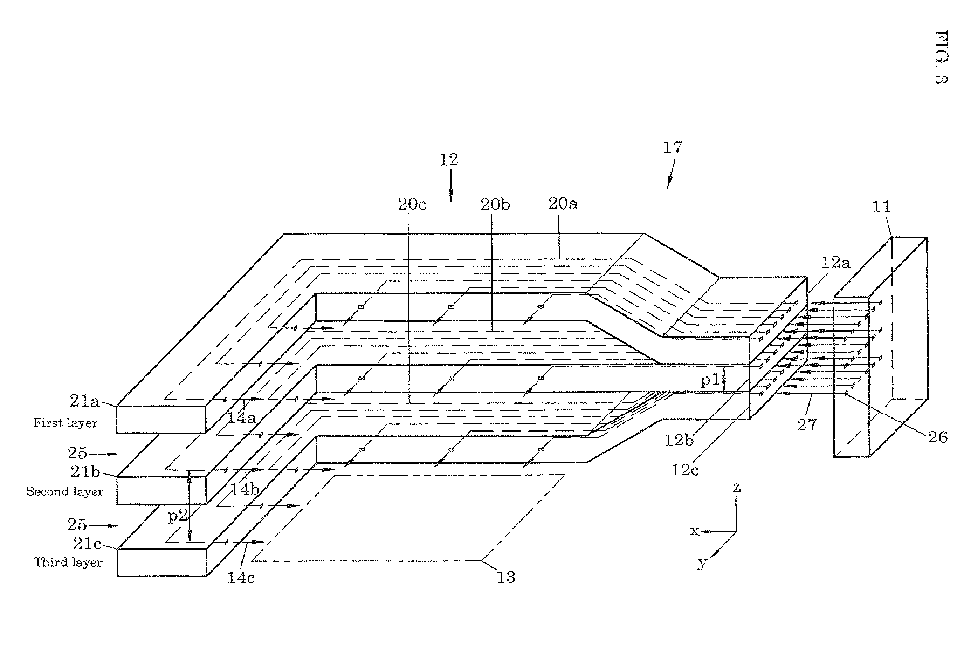

FIG. 3 is a perspective view of the optical waveguide device 17 (at the light-emitting side) of the present invention. Light 27 emitted from the two-dimensional light-emitting element 11 in which light emitting regions 26 are placed two-dimensionally is incident upon the cores 20a, 20b, and 20c of the optical waveguides 12a, 12b, and 12c at the light-emitting side. The light having passed through the cores 20a, 20b, and 20c emanates onto the coordinate input region 13 from the end (exit port) of the cores 20a, 20b, and 20c to become the light rays 14a, 14b, and 14c.

Although not illustrated, not only the two-dimensional light-emitting element 11 in which the light emitting regions 26 are individually placed but also the two-dimensional light-emitting element 11 of which the whole surface at the side of the optical waveguides 12a, 12b, and 12c emits light may be accepted. When used in the optical touch panel, either the two-dimensional light-emitting element 11 in which the light emitting region 26 are individually placed or that of which the whole surface emits light generates no difference in ability of detecting the coordinates of an object which blocks the light rays.

In FIG. 3, the light-emitting side optical waveguide laminate 12 and the light-emitting element 11 are drawn apart from each other for the sake of description; however, actually, the light-emitting side optical waveguide laminate 12 and the light-emitting element 11 are optically coupled by closely adhering to each other.

The optical waveguide device 17 shown in FIG. 3 includes three layers of the optical waveguides 12a, 12b, and 12c. Therefore, the exit ports of the light of the cores 20a, 20b, and 20c are placed three-dimensionally (in the x direction, y direction, and z direction). The light rays 14a, 14b, and 14c emanating onto the coordinate input region 13 are divided into three layers in the height direction (z direction). The optical waveguides 12a, 12b, and 12c including three layers closely adhere at a portion where these are optically coupled to the light-emitting element 11, and there is no gap in the z direction. This is advantageous when the light-emitting element 11 is reduced in size. When the size of the light-emitting element 11 is reduced, it is possible to reduce a cost of the light-emitting element 11.

At a portion where the light rays 14a, 14b, and 14c emanate onto the coordinate input region 13, there is the gap 25 between the layers of the optical waveguides 12a, 12b, and 12c. The gap 25 is provided to adjust a distance p2 (pitch in the z direction) between the light rays in the z direction to the suitable size. If the desired distance p2 between the light rays in the z direction is small, there is no need of arranging the gap 25 between the layers. When the distance p2 between the light rays in the z direction is caused to vary for each layer, the size (pitch in the z direction) of the gap 25 for each layer is caused to vary.

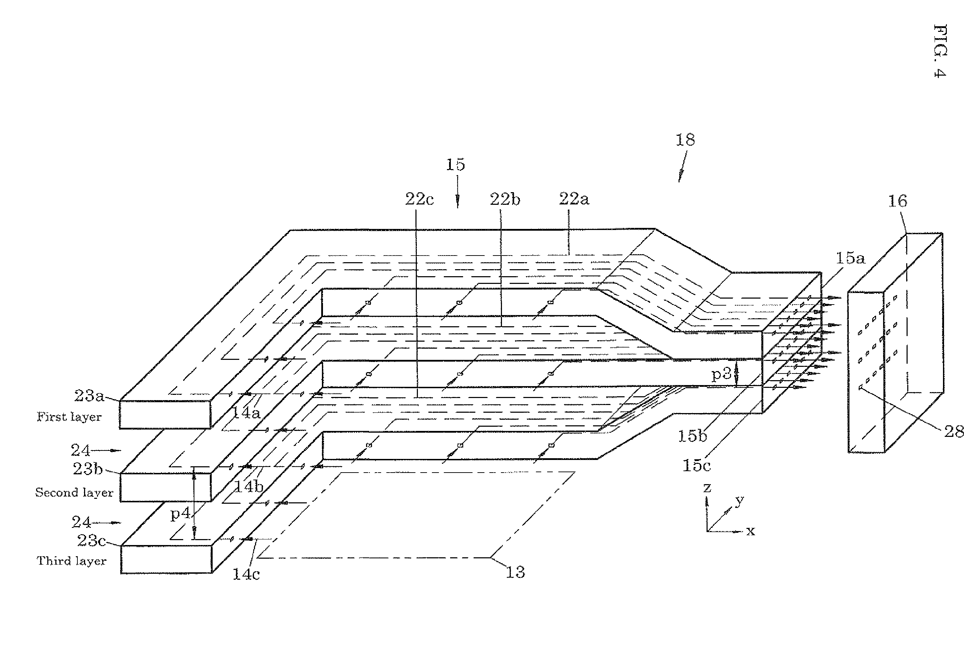

FIG. 4 is a perspective view of the optical waveguide device 18 (light-receiving side) of the present invention. The light ray 14a having passed through the coordinate input region 13 is incident upon each incidence port of the cores 22a of the optical waveguide 15a at the light-receiving side. The light ray 14b is incident upon each incidence port of the cores 22b of the optical waveguide 15b at the light-receiving side. The light ray 14c is incident upon each incidence port of the cores 22c of the optical waveguide 15c at the light-receiving side. Light having passed through the cores 22a, 22b, and 22c emanates from the ends (exit port) of the cores 22a, 22b, and 22c and is incident upon the two-dimensional light-receiving element 16 in which light-receiving regions 28 are placed two-dimensionally.

A CCD area image sensor or a CMOS area image sensor is suitable to use as the two-dimensional light-receiving element 16. In FIG. 4, the light-receiving side optical waveguide laminate 15 and the light-receiving element 16 are drawn apart from each other for the sake of description; however, actually, the light-receiving side optical waveguide laminate 15 and the light-receiving element 16 are optically coupled by closely adhering to each other.

In FIG. 4, it is illustrated such that the light-outputting ports of the cores 22a, 22b, and 22c and the light-receiving regions 28 of the light-receiving element 16 are in one-to-one correspondence. However, the light-outputting ports of the cores 22a, 22b, and 22c and the light-receiving regions 28 of the light-receiving element 16 may not be in one-to-one correspondence. If an arrangement pitch of the light-receiving regions 28 of the light-receiving element 16 is smaller than an arrangement pitch of the light-outputting ports of the cores 22a, 22b, and 22c, the light-outputting ports of the cores 22a, 22b, and 22c partially corresponds to the light-receiving regions 28 of the light-receiving element 16. In this case, it is easier to combine the light-outputting ports of the cores 22a, 22b, and 22c with the optical axes of the light-receiving regions 28 of the light-receiving element 16 than in the case of one-to-one correspondence.

The optical waveguide device 18 shown in FIG. 4 includes three layers of the optical waveguides 15a, 15b, and 15c. Because of this, the light rays 14a, 14b, and 14c entering from the coordinate input region 13 are divided into three layers in the height direction (z direction).

The three layers of the optical waveguides 15a, 15b, and 15c closely adhere at a portion where these are optically coupled to the light-receiving element 16, and there is no gap in the z direction. This is advantageous when the light-emitting element 16 is reduced in size. When the size of the light-emitting element 16 is reduced, it is possible to reduce a cost of the light-emitting element 16.

At a portion where the light rays 14a, 14b, and 14c enter from the coordinate input region 13, there is a gap 24 between the three layers of the optical waveguides 15a, 15b, and 15c. The gap 24 is provided to adjust a distance p4 between the light rays in the z direction to the suitable size. If the desired distance p4 between the light rays in the z direction is small, there is no need of arranging the gap 24 between the layers. When the distance p4 between the light rays in the z direction is caused to vary for each layer, the size (pitch in the z direction) of the gap 24 for each layer is caused to vary.

When the light-emitting side optical waveguide laminate 12 shown in FIG. 3 is used for the optical touch panel 10 of the present invention, it is suitable that a pitch p1 in the z direction of the cores 20a, 20b, and 20c is from 50 µm to 300 µm at a portion where it is optically coupled to the two-dimensional light-emitting element 11. It is suitable that a pitch p2 (equal to the pitch of the light rays 14a, 14b, and 14c in the z direction) is from 0.5 mm to 5 mm in the z direction of the exit ports of the cores 20a, 20b, and 20c at a portion where the light rays 14a, 14b, and 14c emanate onto the coordinate input region 13.

When the light-receiving side optical waveguide laminate 15 shown in FIG. 4 is used for the optical touch panel 10 of the present invention, it is suitable that a pitch p3 is from 50 µm to 300 µm in the z direction of the cores 22a, 22b, and 22c at a portion where it is optically coupled to the two-dimensional light-receiving element 16. It is suitable that a pitch p4 (equal to the pitch of the light rays 14a, 14b, and 14c in the z direction) is from 0.5 mm to 5 mm in the z direction of the incidence ports of the cores 22a, 22b, and 22c at a portion where the light rays 14a, 14b, and 14c enter from the coordinate input region 13.

In the optical touch panel 10 of the present invention, the pitch p2 in the z direction of the exit ports of the cores 20a, 20b, and 20c of the optical waveguides 12a, 12b, and 12c at the light-emitting side shown in FIG. 3 and the pitch p4 in the z direction of the incidence ports of the cores 22a, 22b, and 22c of the optical waveguides 15a, 15b, and 15c at light-receiving side shown in FIG. 4 are normally equal.

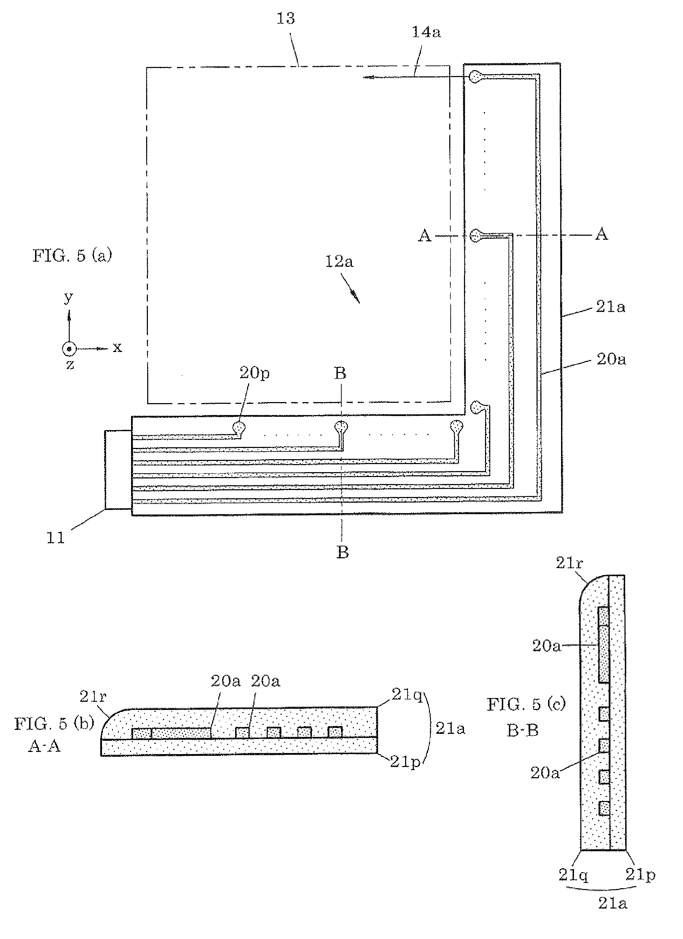

FIG. 5 is an explanatory view showing the shape of the cores 20a and the clad 21a of the optical waveguide 12a of the light-emitting side optical waveguide laminate 12 used in the optical waveguide device 17 (at the light-emitting side) of the present invention.

As shown in FIG. 5(a), an outputting portion 20p of the light of the core 20a is formed to have a semicircular lens shape. The thickness of the semicircular lens portion is the same as the thickness of the other portions of the core 20a, and thus, the semicircular lens has an even surface. Therefore, the semicircular lens does not have a lens function in the thickness-wise direction. The provision of the semicircular lens prohibits a spread of the outputting light ray 14a in the lateral direction (x direction or y direction).

As shown in FIG. 5(b) and FIG. 5(c), the cores 20a are formed on an under-clad 21p and embedded in an over-clad 21q. As used herein, the under-clad 21p and over-clad 21q are together referred to as a clad 21a. A light-outputting surface 21r of the over-clad 21q is one part out of four equal parts along the central axis of a cylinder i.e., a quarter cylindrical lens. The provision of the quarter cylindrical lens prohibits a spread of the light emitted from the cores 20a in the height direction (z direction).

Due to the fact that the outputting portion 20p of the core 20a is in the semicircular lens shape, the outputting light ray 14a does not spread in a lateral direction. Moreover, due to the fact that the light-outputting surface 21r of the over-clad 21q is the quarter cylindrical lens, the outputting light ray 14a does not spread in a vertical direction. Due to this combination, the thin parallel light ray 14a is obtained in the optical waveguide device 17 (at the light-emitting side) of the present invention. The above description about the optical waveguide 12a holds true of those about the optical waveguide 12b and the optical waveguide 12c. Therefore, the optical waveguide device 17 (at the light-emitting side) of the present invention is suitably used in the optical touch panel 10.

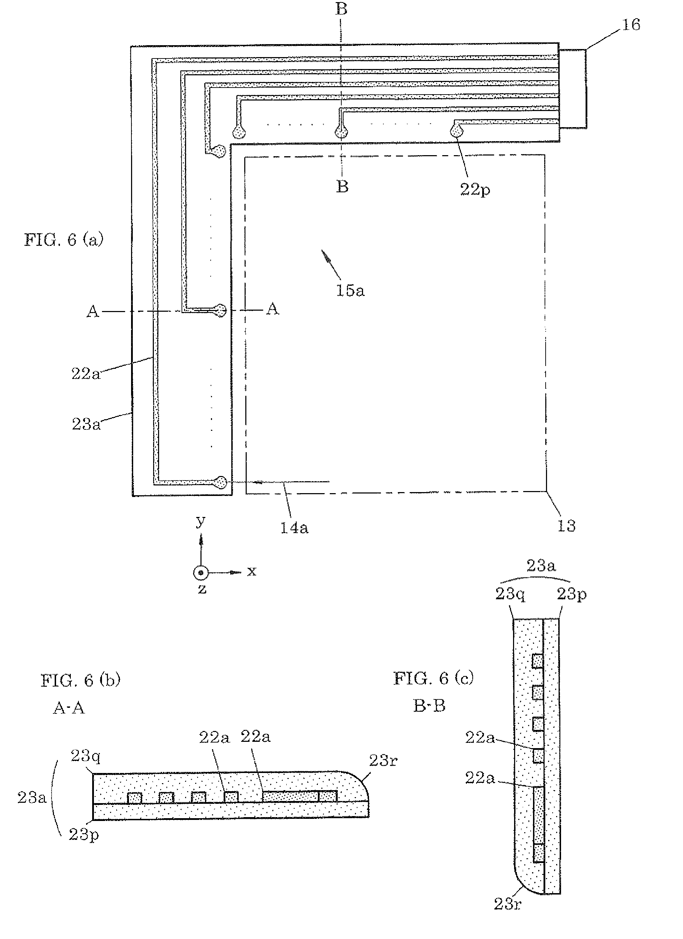

FIG. 6 is an explanatory view showing the shape of the core 22a and clad 23a of the optical waveguide 15a of the light-receiving side optical waveguide laminate 15 used in the optical waveguide device 18 (at the light-receiving side) of the present invention.

As shown in FIG. 6(a), an inputting portion 22p of the light of the core 22a is formed to have a semicircular lens shape. The thickness of the semicircular lens portion is the same as the thickness of the other portions of the core 22a, and thus, the semicircular lens has an even surface. The provision of the semicircular lens converges the incident light ray 14a to the core 22a at the center of the core 22a on the x-y plane.

As shown in FIG. 6(b) and FIG. 6(c), the cores 22a are formed on an under-clad 23p and embedded in an over-clad 23q. As used herein, the under-clad 23p and over-clad 23q are together referred to as a clad 23a. The light inputting surface 23r of the over-clad 23q is one part out of four equal parts along the central axis of a cylinder i.e., a quarter cylindrical lens. The provision of the quarter cylindrical lens converges the incident light ray 14a at the center of the cores 22a in the z direction.

Due to the fact that the inputting portion 22p of the core 22 is in the semicircular lens shape, the incident light ray 14a is converged horizontally at the center of the core 22a. Moreover, due to the fact that the light-inputting surface 23r of the over-clad 23q is the quarter cylindrical lens, the incident light ray 14a is converged at the center of the cores 22a in the height direction. Due to this combination, the incident light ray 14a is converged at the center of the cores 22a in the optical waveguide device 18 (at the light-receiving side) of the present invention. This enhances a utilization efficiency of the incident light ray 14a. The above description about the optical waveguide 15a holds true of those about the optical waveguide 15b and the optical waveguide 15c. Therefore, the optical waveguide device 18 (at the light-receiving side) of the present invention is suitably used in the optical touch panel 10.

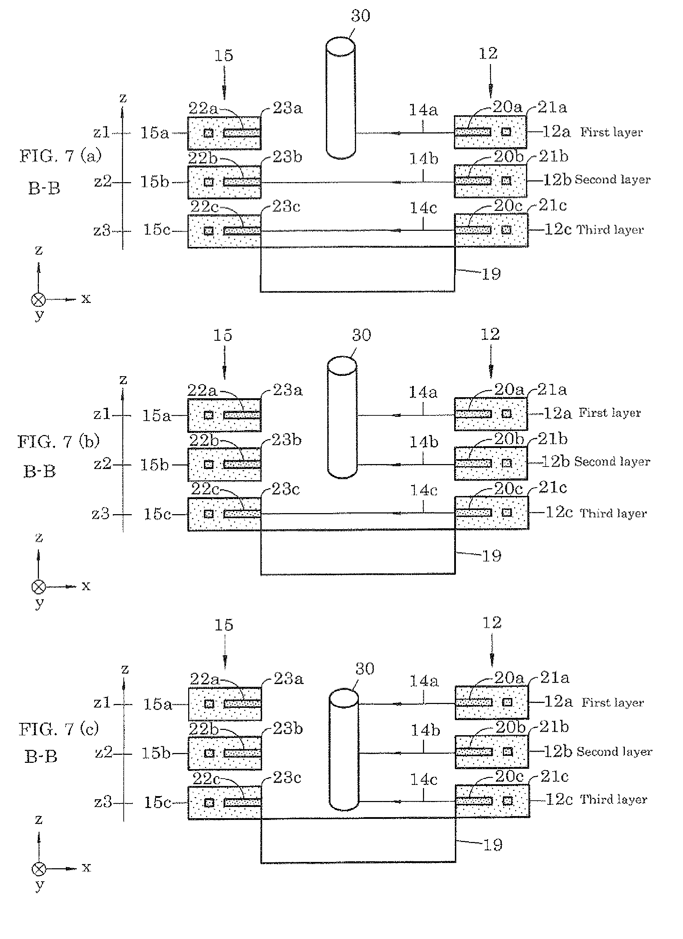

FIG. 7 is an explanatory view of a method of detecting the three-dimensional coordinates, i.e., (x, y, and z) coordinates of an object 30 in the optical touch panel 10 of the present invention. As shown in FIG. 7(a), if the object 30 blocks the light ray 14a of a first layer, then it is detected that the z coordinate of the object 30, along with the (x, y) coordinates of the object 30, is z1.

As shown in FIG. 7(b), if the object 30 blocks the light ray 14a of the first layer and the light ray 14b of a second layer, then it is detected that the z coordinate of the object 30, along with the (x, y) coordinates of the object 30, is z2. As shown in FIG. 7(c), if the object 30 blocks the light ray 14a of the first layer, the light ray 14b of the second layer, and the light ray 14c of a third layer, then it is detected that the z coordinate of the object 30, along with the (x, y) coordinates of the object 30, is z3. At all stages described above, the method of detecting the (x, y) coordinates of the object 30 is the same as that of a conventional optical touch panel.

As shown in FIG. 7, when the optical waveguides 12a, 12b, and 12c at the light-emitting side and the optical waveguides 15a, 15b, and 15c at light-receiving side include three layers, respectively, the z coordinate of the object 30 is detected at the three stages as z1, z2, and z3.

Although not illustrated, when the optical waveguides 12a, 12b, and 12c at the light-emitting side and the optical waveguides 15a, 15b, and 15c at light-receiving side include two layers, respectively, the z coordinate of the object 30 is detected at the two stages as z1 and z2. Similarly, when the optical waveguides 12a, 12b, and 12c at the light-emitting side and the optical waveguides 15a, 15b, and 15c at light-receiving side include n layers (n is an integer of 4 or more), respectively, the z coordinate of the object 30 is detected at n stages as z1, z2, ..., and zn. The number of layers of the optical waveguides 12a, 12b, and 12c at the light-emitting side and that of the optical waveguides 15a, 15b, and 15c at light-receiving side are set according to the number of stages required for the detection in the z direction.

### EXAMPLES

### [Material for under-clad and over-clad]

Materials for an under-clad and an over-clad were prepared by mixing 100 parts by weight of an epoxy resin containing an alicyclic skeleton (component A; EP4080E manufactured by ADEKA Corporation) and 2 parts by weight of a photo-acid generating agent (component B; CPI-200K manufactured by SAN-APRO Ltd.).

### [Material for core]

A material for a core was prepared by dissolving 40 parts by weight of an epoxy-based resin containing a fluorene skeleton (component C; OGSOL EG manufactured by Osaka Gas Chemicals Co., Ltd.), 30 parts by weight of an epoxy-based resin containing a fluorine structure (component D; EX-1040 manufactured by Nagase ChemteX Corporation), 30 parts by weight of 1,3,3-tris(4-(2-(3-oxetanyl))butoxyphenyl)butane (component E), and 1 part by weight of a photo-acid generating agent (component B: CPI-200K manufactured by SAN-APRO Ltd.) in 40.8 parts by weight of ethyl lactate. 1,3,3-Tris(4-(2-(3-oxetanyl))butoxyphenyl)butane was synthesized according to Example 2 described in JP-A-2007-070320.

### [Manufacturing of optical waveguide]

The material for an under-clad was applied onto a surface of a PEN (polyethylene naphthalate) film (300 mm × 300 mm × 0.188 mm) by using an applicator after which the whole surface was subject to a UV rays exposure having an intensity of 1,000 mJ/cm². Next, an under-clad was formed by performing a heat treatment at 80°C for 5 minutes. The thickness of the under-clad was measured by using a contact type film thickness meter, and then, the thickness was 20 µm. Moreover, the refractive index of the under-clad at a wavelength of 830 nm was 1.510.

After applying the material for a core on the whole surface of the under-clad by using an applicator, a drying treatment was performed at 100°C for 5 minutes.

Then, a synthetic quartz based-chromium mask (photo mask) having a predetermined pattern was placed over a film of the core material and a UV rays exposure having an intensity of 2,500 mJ/cm² was performed by a proximity exposure (gap 100 µm). The UV rays passed through an i-line band pass filter. Further, a heat treatment was performed at 100°C for 10 minutes.

Next, a development was performed by using an aqueous y (gamma) butyrolactone solution, and a pattern of a core was obtained by dissolving and removing an unexposed portion of the film of the core material. Further, a heat treatment was performed at 120°C for 5 minutes and thereby a core was manufactured.

The cross-sectional dimensions of the core were measured by using a microscope. Then, the width was measured to be 30 µm and the height was measured to be 30 µm. The refractive index of the core at a wavelength of 830 nm was 1.592.

The material for an over-clad was applied onto the core and the under-clad by using an applicator. Next, a mold made of quartz having therein a negative of a quarter cylindrical lens was pressed against the material for an over-clad and the quarter cylindrical lens was transferred to the material for an over-clad. A UV rays exposure having an intensity of 2,000 mJ/cm² was performed on the entire surface of the material for an over-clad. Next, a heat treatment was performed at 80°C for 5 minutes and the material for an over-clad was hardened. After the hardening of the material for an over-clad, the mold made of quartz wad demolded. The refractive index of the over-clad at a wave length of 830 nm was 1.510.

### [Manufacturing of light-emitting side optical waveguide device]

A three-layered light-emitting side optical waveguide laminate 12 shown in FIG. 3 was manufactured by using the three optical waveguides 12a, 12b, and 12c that have been manufactured. The pitch p1 of the cores 20a, 20b, and 20c in the z direction was 105 µm at a portion where these cores were coupled to the light-emitting element 11. Moreover, the pitch p2 of the cores 20a, 20b, and 20c in z direction was 1.1 mm at the light-outputting portion of the light rays 14a, 14b, and 14c.

The light-emitting element 11 and the optical waveguide laminate 12 were optically coupled by using a UV curable adhesive. The light-emission wavelength of the light-emitting element 11 was 880 nm.

### [Manufacturing of light-receiving side optical waveguide device]

A three-layered light-receiving side optical waveguide laminate 15 shown in FIG. 4 was manufactured by using the three optical waveguides 15a, 15b, and 15c that have been manufactured. The pitch p3 of the cores 22a, 22b, and 22c in the z direction was 105 µm at a portion where these cores were coupled to the light-receiving element 16. Moreover, the pitch p4 of the cores 22a, 22b, and 22c in the z direction was 1.1 mm at the light-inputting portion of the light rays 14a, 14b, and 14c.

As the light-receiving element 16, a CCD area image sensor (manufactured by Hamamatsu Photonics K. K.) with a pixel count of 1024 pixels × 1024 pixels and a pixel pitch of 12 µm vertically and 12 µm horizontally was used. The light-receiving element 16 and the optical waveguide 15 were optically coupled by using a UV curable adhesive.

### [Manufacturing of optical touch panel]

The optical waveguide device 17 at the light-emitting side and the optical waveguide device 18 at the light-receiving side were placed to face each other as shown in FIG. 1, and the optical touch panel 10 was manufactured. It was so adjusted such that light from the light-emitting element 11 correctly entered the light-receiving element 16 through the light-emitting side optical waveguide laminate 12, the coordinate input region 13 and the light-receiving side optical waveguide laminate 15. The light rays 14a, 14b, and 14c passing through the coordinate input region 13 of the optical touch panel 10 are divided into three layers in the z direction, as shown in FIG. 2(b). As shown in FIG. 7, the z coordinates at three stages are z1, z2, and z3 as they are farther away from the surface of the coordinate input region 13.

As shown in FIG. 7, when the object 30 blocked the light ray 14a of the first layer, it was detected that the z coordinate of the object 30, along with the (x, y) coordinates of the object 30, was z1. When the object 30 blocked the light ray 14a of the first layer and the light ray 14b of the second layer, it was detected that the z coordinate of the object 30, along with the (x, y) coordinates of the object 30, was z2. When the object 30 blocked the light ray 14a of the first layer, the light ray 14b of the second layer, and the light ray 14c of the third layer, it was detected that the z coordinate of the object 30, along with the (x, y) coordinates of the object 30, was z3. As a result, it was proved that the three-dimensional coordinates (x, y, and z coordinates) of the object 30 could be detected optically in the optical touch panel 10 of the present invention.

### [Measurement Method]

### [Refractive index]

A film for measuring refractive index was manufactured by forming, by spin coating, a film of each of materials for an under-clad and an over-clad on a silicon wafer. The refractive indices of the films for measuring refractive index were measured by using a prism coupler (SPA-400 manufactured by Cylon Technology Inc.).

### [Width and height of core]

The manufactured optical waveguide was cut by using a Dicer type cutting machine (DAD522 manufactured by DISCO Corporation). The cut surface was observed and measured by using a laser microscope (manufactured by KEYENCE Corporation) and the width and height of the core was obtained.

### INDUSTRIAL APPLICABILITY

The optical waveguide device of the present invention is suitable to use in an optical touch panel. The optical touch panel of the present invention is suitable as input apparatuses such as an ATM and an automatic ticket machine which are used by the unspecified number of people. A conventional ATM and automatic ticket machine enabled two-dimensional coordinate input only; on the other hand, the ATM and automatic ticket machine in which the optical touch panel of the present invention is used enables three-dimensional coordinate input.

## Claims

1. An optical waveguide device (18), including:
an optical waveguide laminate (15) comprising a light input end and a light output end, and
a two-dimensional light receiving element (16) in which light-receiving regions (28) are two-dimensionally placed,
wherein at least some of a plurality of optical waveguides (15a, 15b, 15c) of the optical waveguide laminate (15) are laminated, and
the light output end is optically coupled to the two-dimensional light-receiving element (16).

2. The optical waveguide device (18) according to claim 1, wherein at the light output end, the plurality of optical waveguides (15a, 15b, 15c) are laminated by closely adhering to each other, and at the light input end, the plurality of optical waveguides (15a, 15b, 15c) are arranged with intervals between each other.

3. An optical waveguide device (17), including:
an optical waveguide laminate (12) comprising a light input end and a light output end, and
a two-dimensional light-emitting element (11), in which light-emitting regions (26) are two-dimensionally placed,
wherein at least some of a plurality of optical waveguides (12a, 12b, 12c) of the optical waveguide laminate (12) are laminated, and
the light input end is optically coupled to the two-dimensional light-emitting element (11).

4. The optical waveguide device (17) according to claim 3, wherein at the light input end, the plurality of optical waveguides (12a, 12b, 12c) are laminated by closely adhering to each other, and at the light output end, the plurality of optical waveguides (12a, 12b, 12c) are arranged with intervals between each other.

5. An optical touch panel (10), comprising:
the optical waveguide device (18) according to claim 1 or 2, as a light-receiving side optical waveguide device; and
the optical waveguide device (17) according to claim 3 or 4, as a light-emitting side optical waveguide device, wherein a plurality of light ray layers that emanate from the light-emitting side optical waveguide device (17) and enter the light-receiving side optical waveguide device (18) are provided in a coordinate input region (13), and the plurality of light ray layers are parallel to a surface of the coordinate input region (13) and are arranged with intervals between each other.
